Europäisches Patentamt

European Patent Office

Office européen des brevets

(19)

(11) **EP 1 202 205 A1**

(12) **DEMANDE DE BREVET EUROPEEN**

(43) Date de publication:
**02.05.2002 Bulletin 2002/18**

(51) Int Cl.⁷: **G06F 17/60**

(21) Numéro de dépôt: **01440365.3**

(22) Date de dépôt: **26.10.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **30.10.2000 FR 0013915**

(71) Demandeur: **Themis Conception Informatique
(Société à responsabilité limitée)
67100 Strasbourg (FR)**

(72) Inventeurs:
• **Goepper, Jean-Claude
67380 Lingolsheim (FR)**
• **Heck, Michel
67100 Strasbourg (FR)**

(74) Mandataire: **Rhein, Alain
c/o Cabinet Bleger-Rhein,
8, Avenue Pierre Mendès France
67300 Schiltigheim (FR)**

(54) **Procédé pour la determination du prix moyen d'achat des articles d'un stock**

(57) L'invention concerne un procédé pour la détermination du prix moyen d'achat des articles d'un stock constitué, d'une part, par une quantité initiale d'articles à un prix unitaire déterminé, et, d'autre part, par une quantité additionnelle d'articles correspondant à une entrée en stock, ceci après une telle entrée en stock.

Ce procédé consiste en ce que l'on attribue une date d'entrée en stock à cette quantité d'articles et que, lors de la réception de la facture correspondant à cette entrée en stock, l'on détermine la quantité d'articles facturés et leur prix unitaire facturé.

L'on contrôle la correspondance entre les quantités d'articles entrés en stock et facturés et l'on détermine, de manière différée dans le temps et à une date de traitement, le prix moyen d'achat des articles en stock à la date d'entrée en stock.

L'invention concerne, encore, un procédé pour la gestion différée dans le temps des articles d'un stock.

EP 1 202 205 A1

**Description**

La présente invention concerne un procédé pour la détermination du prix moyen d'achat des articles d'un stock de marchandises et/ou de matières premières. Cette invention est, encore, relative à un procédé pour la gestion différée des articles d'un tel stock de marchandises et/ou de matières premières.

Ladite invention concerne le domaine des outils conçus aptes à assurer la gestion des stocks de marchandises et/ou de matières premières et trouvera une application toute particulière lorsqu'il s'agit de déterminer le prix des articles de ce stock et/ou la valeur de ce stock, après un mouvement de stock.

A ce propos, il convient d'observer qu'il est, d'ores et déjà, connu de déterminer le prix moyen d'achat des articles d'un stock de marchandises et/ou de matières premières après une entrée en stock d'une certaine quantité de ces articles.

La détermination de ce prix moyen d'achat se fait au travers d'une méthode de type événementielle consistant, après chaque nouvelle entrée en stock, à recalculer un prix moyen d'achat à partir, d'une part, de la quantité d'articles présents en stock avant ladite entrée en stock et en fonction du prix unitaire moyen déterminé de ces articles et, d'autre part, de la quantité d'articles entrés en stock et d'un coût pré-établi de ces derniers.

C'est, également, par une telle méthode événementielle et à partir de ces différentes données qu'il est déterminé la valeur du stock.

Cette méthode événementielle présente, en fait, un certain nombre d'inconvénients et conduit, dans la plupart des cas, à la détermination d'une valeur fausse du prix moyen d'achat.

En effet, le calcul de ce prix moyen d'achat est, en partie, basé sur un coût pré-établi des articles entrant en stock. De tels coûts pré-établis correspondent, par exemple, à des prix figurant dans un catalogue ou peuvent être donnés, initialement, à titre indicatif par le fournisseur. De tels prix peuvent encore être susceptibles d'évoluer, notamment en raison des fluctuations d'une monnaie ou autre.

Aussi, il est fréquent que le prix effectivement facturé de ces articles ne corresponde pas au prix pré-établi. Ceci peut, cependant, uniquement être constaté lors de la réception de la facture correspondant à ladite entrée en stock, soit bien postérieurement à une telle entrée en stock et, en tout cas, après la détermination du nouveau prix moyen d'achat par la méthode événementielle.

Il en résulte qu'un tel prix moyen d'achat est entaché d'erreurs dès l'occurrence d'un prix facturé non conforme au coût pré-établi.

De plus, on observera que, après avoir déterminé un prix moyen d'achat erroné, on affecte, sans être forcément conscient de cette erreur, ce prix erroné à la quantité totale d'articles en stock. Aussi, lors d'une nouvelle entrée en stock, l'on détermine le nouveau prix moyen d'achat, correspondant à cette nouvelle entrée en stock, sur la base d'un prix moyen d'achat erroné.

Ainsi, chaque nouveau prix moyen d'achat, déterminé sur la base d'un prix moyen d'achat erroné, est lui-même entaché d'erreur.

Sachant, en outre, que c'est sur la base d'un tel prix moyen d'achat qu'il est déterminé la valeur du stock de marchandises et/ou de matières premières ainsi que la revalorisation de ce stock, celles-ci sont, elles aussi, faussées.

La présente invention permet de pallier les inconvénients des procédés de l'état de la technique au travers d'un nouveau procédé de détermination du prix moyen d'achat d'articles ainsi que d'un nouveau procédé de gestion de ces derniers.

A cet effet, la présente invention concerne un procédé pour la détermination du prix moyen d'achat des articles d'un stock de marchandises et/ou de matières premières constitué, d'une part, par une quantité initiale d'articles à un prix unitaire déterminé, et, d'autre part, par une quantité additionnelle d'articles correspondant à une entrée en stock, ceci après une telle entrée en stock, caractérisé par le fait que :

- lors de l'entrée en stock d'une quantité d'articles, l'on attribue une date d'entrée en stock à cette quantité d'articles et l'on enregistre, d'une part, la quantité de ces articles et, d'autre part, ladite date d'entrée en stock ;

- lors de la réception d'une facture correspondant à cette entrée en stock, l'on détermine, d'une part, la quantité d'articles facturés et, d'autre part, le prix unitaire facturé de ces articles ;

- l'on assure une comparaison entre la quantité d'articles entrés en stock et la quantité d'articles facturés ;

- en cas de correspondance entre les quantités d'articles entrés en stock et facturés, l'on enregistre le prix unitaire facturé correspondant à la quantité d'articles entrés en stock à la date d'entrée en stock ;

- l'on détermine, par l'intermédiaire de moyens de calculs, de manière différée dans le temps et à une date de traitement déterminée, le prix moyen d'achat de la quantité d'articles en stock à la date d'entrée en stock, ceci en fonction, d'une part, de la quantité d'articles en stock avant ladite entrée en stock et du prix unitaire déterminé de ces derniers et, d'autre part, de la quantité d'articles entrés en stock et du prix unitaire facturé de ces derniers.

Selon une autre caractéristique de la présente invention :

- lorsque l'on réceptionne la facture correspondant à cette entrée en stock, l'on assure une saisie, par l'intermédiaire de moyens de saisie, ainsi qu'un enregistrement, par l'intermédiaire de moyens d'enregistrement et dans une mémoire, de la quantité d'articles facturés ainsi que du prix unitaire facturé de ces articles ;

- l'on assure, par l'intermédiaire de moyens de comparaison, la comparaison entre la quantité d'articles entrés en stock et la quantité d'articles facturés ;

- en cas de correspondance entre la quantité d'articles entrés en stock et la quantité d'articles facturés, l'on associe, par l'intermédiaire de moyens d'association, ce prix unitaire facturé, d'une part, à la quantité d'articles entrés en stock et, d'autre part, à la date d'entrée en stock de ces derniers en vue de déterminer, de manière différée et en date de traitement, le prix moyen d'achat des articles en stock à la date d'entrée en stock de la quantité d'articles.

Une caractéristique additionnelle consiste en ce que :

- le jour où l'on établit la correspondance entre les quantités d'articles entrés en stock et facturés, l'on attribue à la facture une date d'imputation en achat ;

- l'on procède, au plus tôt à la fin du mois comptable correspondant à ladite date d'imputation en achat et à la date de traitement, à la détermination du prix moyen d'achat des articles en stock à la date d'entrée en stock.

Ainsi, lorsque les dates d'imputation en achat et d'entrée en stock correspondent au même mois comptable, l'on assure, au plus tôt à la fin du mois comptable correspondant à cette date d'entrée en stock et à la date de traitement, la détermination du prix moyen d'achat des articles en stock à la date d'entrée en stock.

Selon une autre caractéristique, l'on détermine, de manière différée dans le temps et à une certaine date de traitement, la valeur du stock à la date d'entrée en stock d'une quantité définie d'articles, ceci en fonction du prix moyen d'achat des articles du stock et de la quantité de ces articles présents dans le stock à la date d'entrée en stock.

La présente invention concerne, encore, un procédé pour la gestion différée des articles d'un stock de marchandises et/ou de matières premières comportant une quantité initiale d'articles à un prix unitaire déterminé et à laquelle, d'une part, s'ajoute au moins une certaine quantité d'articles lors d'au moins une entrée en stock et, d'autre part, se retranche au moins une certaine quantité d'articles lors d'au moins une sortie de stock, caractérisé en ce que :

- pour chaque entrée d'une quantité d'articles en stock, l'on attribue une date d'entrée en stock et l'on enregistre, d'une part, la quantité de ces articles et, d'autre part, ladite date d'entrée en stock ;

- après réception de la facture correspondant à cette entrée en stock, l'on assure une comparaison entre les quantités d'articles entrés en stock et facturés pour, en cas de correspondance entre ces deux quantités, d'une part, enregistrer dans une mémoire, par l'intermédiaire de moyens d'enregistrement, un prix unitaire facturé de ces articles et, d'autre part, associer, par l'intermédiaire de moyens d'association, ce prix unitaire facturé à ladite date d'entrée en stock et à la quantité de ces articles ;

- pour chaque sortie de stock d'une quantité d'articles, l'on attribue une date de sortie de stock et, d'une part, l'on enregistre dans une mémoire et, d'autre part, l'on associe ladite date de sortie de stock ainsi que la quantité d'articles correspondant à cette sortie de stock ;

- l'on détermine, par l'intermédiaire de moyens de calculs, de manière différée dans le temps et à une date de traitement déterminée, le prix moyen d'achat de la quantité d'articles en stock à la date d'entrée en stock, ceci en fonction, d'une part, de la quantité d'articles en stock et du prix unitaire de ces derniers avant ladite entrée en stock et, d'autre part, de la quantité d'articles entrés en stock et du prix unitaire facturé de ces derniers, voire, le cas échéant, de la quantité d'articles sortis de ce stock.

Selon une caractéristique additionnelle, l'on détermine, par l'intermédiaire de moyens de calculs, de manière différée dans le temps et à ladite date de traitement, la valeur du stock à la date d'entrée en stock et/ou à la date de sortie de stock, ceci à partir du prix moyen d'achat calculé en fonction du prix unitaire facturé.

Selon une autre caractéristique de l'invention :

- le jour où l'on établit la correspondance entre les quantités d'articles entrés en stock et facturés, l'on attribue à la facture une date d'imputation en achat ;

- l'on procède, au plus tôt à la fin du mois comptable correspondant à ladite date d'imputation en achat et à la date de traitement, à la détermination du prix moyen d'achat des articles en stock à la date d'entrée en stock et/ou à la détermination de la valeur du stock à la date d'entrée en stock d'une quantité déterminée d'articles.

Une caractéristique additionnelle concerne le fait que, lorsque la date de sortie de stock correspond au même mois comptable que la date d'imputation en achat ou est antérieure à ce mois comptable, l'on procède, au plus tôt à la fin du mois comptable correspondant à cette date d'imputation en achat et à la date de traitement, à la détermination du prix moyen d'achat des articles en stock à la date d'entrée en stock et/ou à la détermination de la valeur du stock à la date d'entrée en stock et/ou à la détermination de la valeur du stock à la date de sortie du stock.

Selon encore une autre caractéristique, lorsque les dates d'imputation en achat, d'entrée en stock et de sortie de stock correspondent au même mois comptable, l'on assure, au plus tôt à la fin du mois comptable correspondant à cette date d'entrée en stock et à la date de traitement, la détermination du prix moyen d'achat des articles en stock à la date d'entrée en stock et/ou la détermination de la valeur du stock à la date d'entrée en stock et/ou la détermination de la valeur du stock à la date de sortie du stock.

Finalement, ce procédé est caractérisé par le fait qu'au moins certaines étapes de ce procédé sont mises en oeuvre par des moyens de traitement, notamment de type informatique, par exemple sous la forme d'un logiciel.

Les avantages de la présente invention consistent en ce que le prix moyen d'achat d'une certaine quantité d'articles et/ou la valeur du stock de ces articles, après une entrée et/ou une sortie en stock, sont déterminés en fonction d'un prix d'achat effectivement facturé et contrôlé.

Il en résulte que le prix moyen d'achat et/ou la valeur du stock ainsi déterminés sont exacts et ne sont plus tributaires d'un prix pré-établi susceptible d'évoluer.

De plus, le présent procédé prend, uniquement, en compte des factures ayant été contrôlées et avalisées par rapport à la livraison du fournisseur.

On observera que la détermination du prix moyen d'achat et/ou de la valeur du stock est réalisée à une date de traitement déterminée qui ne peut être antérieure à la date de contrôle de la facture du fournisseur (date d'imputation en achat).

Cependant, selon un autre avantage du présent procédé, ce dernier consiste à choisir la date de traitement au plus tôt à la fin du mois correspondant au mois de la date d'imputation en achat des articles. Ceci autorise, après une saisie et un contrôle des factures au fur et à mesure de leur réception, un traitement en fin de mois de ces factures. Cependant, pour des raisons de commodités, il est, encore, possible de choisir la date de traitement au moins au début du mois calendaire suivant le mois comptable correspondant au mois de la date d'imputation en achat des articles.

Ainsi, il est possible de déterminer un prix moyen d'achat et/ou une valeur du stock à la fin de chaque mois ou, si une facture n'est pas encore réceptionnée et/ou contrôlée, à la fin d'un des mois suivant immédiatement la date d'entrée en stock, ceci dès réception et contrôle de la facture correspondante.

Ce procédé autorise, notamment en début de mois, l'établissement d'un rapport d'activité, usuellement dénommé « reporting », tenant compte du prix moyen d'achat et/ou de la valeur du stock du mois précédent.

En somme, le procédé selon l'invention permet, avantageusement, une gestion différée des achats sur la base des coûts réels facturés des articles entrant et/ou sortant dans un stock de marchandises et/ou de matières premières.

La présente invention sera mieux comprise à la lumière de la description qui va suivre se rapportant à des modes de réalisation qui ne sont donnés qu'à titre d'exemples indicatifs et non limitatifs.

Ladite invention concerne le domaine des outils conçus aptes à assurer la gestion des articles d'un stock de marchandises et/ou de matières premières, plus particulièrement, après un mouvement de ce stock.

A ce propos, on observera qu'un tel stock comporte une quantité initiale d'articles Q dont on connaît le prix unitaire PUS. Ce dernier a, de préférence, été déterminé en fonction d'un coût réel facturé.

Un tel stock subit un certain nombre de mouvements consistant en au moins une entrée et/ou en au moins une sortie d'une certaine quantité d'articles.

A ce propos, on observera que lors d'une entrée en stock d'un certain nombre d'articles, on détermine la quantité QE d'articles ayant été livrés et entrant dans ce stock.

Ainsi, après réception d'une livraison d'un fournisseur, ce stock s'enrichit d'une quantité QE additionnelle d'articles venant se rajouter à la quantité initiale Q d'articles en stock, ce dernier comportant, alors, une quantité Q+QE d'articles après ladite entrée en stock.

A ce propos, on remarquera qu'une telle entrée en stock se produit à une date bien déterminée correspondant à une date d'entrée en stock DES.

Selon le procédé, lors de l'entrée en stock d'une quantité QE d'articles, l'on attribue une telle date d'entrée en stock DES à cette quantité d'articles QE.

L'on procède, alors, à l'enregistrement dans une mémoire, d'une part, de ladite quantité QE de ces articles et, d'autre part, de ladite date d'entrée en stock DES.

A ce propos, on observera qu'un tel enregistrement s'opère par l'intermédiaire de moyens d'enregistrement que comportent, de préférence, des moyens informatiques, notamment un ordinateur, ceux-ci étant, encore, susceptibles de recevoir ladite mémoire.

En fait, la livraison d'une quantité QE d'articles est suivie, dans un délai plus ou moins bref, de la réception d'une facture correspondant à la livraison et à l'entrée en stock de cette quantité QE d'articles.

Aussi, lors de la réception de cette facture, l'on détermine, à partir de cette dernière, d'une part, la quantité QEF d'articles facturés et, d'autre part, le prix unitaire facturé PUF de ces articles.

L'on assure, alors, par l'intermédiaire de moyens de comparaison, une comparaison entre, d'une part, la quantité QE d'articles entrés en stock et relevée à la date d'entrée en stock DES et, d'autre part, la quantité QEF d'articles facturés au travers de ladite facture.

En cas de désaccord entre les quantités QE et QEF, l'on peut procèder à la suspension du déroulement du procédé selon l'invention jusqu'à la régularisation de la situation donc jusqu'à, selon le cas, la livraison du complément et/ou la réception d'un avoir.

Cependant, en cas de correspondance entre la quantité QE d'articles entrés en stock et la quantité d'articles QEF facturés, l'on enregistre, par l'intermédiaire de moyens d'enregistrement et dans une mémoire, le prix unitaire facturé PUF correspondant à la quantité QE d'articles entrés en stock à la date d'entrée en stock DES.

L'on détermine, par l'intermédiaire de moyens de calculs, le prix moyen d'achat PMA de la quantité Q+QE d'articles en stock à la date d'entrée en stock DES de la quantité QE additionnelle d'articles.

Ce prix moyen d'achat PMA est déterminé en fonction, d'une part, de la quantité Q d'articles en stock avant ladite entrée en stock en date DES et du prix unitaire déterminé PUS de ces derniers et, d'autre part, de la quantité QE d'articles entrés en stock et du prix unitaire facturé PUF de ces derniers.

En fait, ce prix moyen d'achat PMA est déterminé au travers de l'application de l'équation mathématique (1) suivante :

$$PMA = (Q * PUS + QE * PUF)/(Q + QE) \qquad (1)$$

Il convient, de plus, de remarquer que ce prix moyen d'achat PMA est déterminé à une date de traitement déterminée DT, cette dernière étant différée dans le temps par rapport à la date d'entrée en stock DES.

De plus et tel qu'il sera exposé plus loin dans la description, cette date de traitement DT est au moins identique mais, de préférence, postérieure à la date à laquelle il est procédé au contrôle de la correspondance entre, d'une part, la quantité QE d'articles entrés en stock et, d'autre part, la quantité d'articles QEF facturés.

Il convient, encore, d'observer que ledit procédé permet, également, la détermination d'un nouveau prix moyen d'achat PMA' correspondant à une nouvelle entrée en stock d'une quantité QE' d'articles à une date DES'. La détermination de ce nouveau prix moyen d'achat PMA' peut, également, se faire à ladite date de traitement DT lorsque la nouvelle date d'entrée en stock DES' précède cette date de traitement DT, ceci pour une quantité QE' déterminée, facturée QEF' à un prix unitaire facturé PUF' et contrôlée d'articles.

A ce propos, on remarquera que le prix moyen d'achat PMA', correspondant à une telle entrée en stock en date DES', postérieure à une entrée en stock en date DES, est déterminé en fonction du prix moyen d'achat PMA correspondant à cette entrée en stock en date DES. La détermination de ce prix PMA' se fait, après contrôle des quantités QEF' d'articles facturés, par l'application de l'équation susmentionnée ayant été mise à jour en date d'entrée en stock DES', à savoir (2) :

$$PMA' = \left((Q+QE) * PMA + QE'*PUF'\right)/\left((Q+QE)+QE'\right) \qquad (2)$$

Il est évident que le prix moyen d'achat PMA', correspondant à l'entrée en stock en date DES', ne peut être déterminé sans avoir, au préalable, déterminé le prix moyen d'achat PMA des articles entrés en stock à la date DES.

Selon une autre caractéristique de la présente invention :

- lorsque l'on réceptionne la facture correspondant à une entrée en stock, l'on assure, par l'intermédiaire de moyens de saisie, une saisie ainsi qu'un enregistrement, par l'intermédiaire de moyens d'enregistrement et dans une mémoire, de la quantité QEF d'articles facturés ainsi que du prix unitaire facturé PUF de ces articles ;

- l'on assure, par l'intermédiaire de moyens de comparaison, la comparaison entre la quantité QE d'articles entrés en stock et la quantité QEF d'articles facturés ;

- en cas de correspondance entre la quantité d'articles entrés en stock QE et la quantité d'articles facturés QEF, l'on associe, par l'intermédiaire de moyens d'association, ce prix unitaire facturé PUF, d'une part, à la quantité QE d'articles entrés en stock et, d'autre part, à la date d'entrée en stock DES de ces derniers en vue de déterminer, de manière différée et en date de traitement DT, le prix moyen d'achat PMA des articles en stock à la date d'entrée en stock DES de la quantité QE d'articles.

Un tel mode de réalisation permet, à la date de traitement DT, de déterminer le prix moyen d'achat PMA, PMA' correspondant à différentes entrées en stock, en date DES, DES' d'une quantité QE, QE' contrôlée d'articles, ceci, d'une part, pour chacune des dates d'entrée en stock DES, DES' pour lesquelles la correspondance entre la quantité d'articles QE, QE' entrés en stock et facturés QEF, QEF' a été établie et, d'autre part, dans l'ordre croissant de ces dates d'entrée en stock DES, DES'.

A ce propos, on observera que lesdits moyens de saisie, d'enregistrement, de comparaison, d'association, de calcul ainsi que ladite mémoire peuvent se retrouver au niveau desdits moyens informatiques décrits ci-dessus et définis, notamment, par un ordinateur ou analogue.

Selon une autre caractéristique de l'invention, le jour où l'on établit la correspondance entre les quantités d'articles entrés en stock QE et facturés QEF, l'on définit une date d'imputation en achat DIA que l'on attribue à la facture correspondant à la livraison de la quantité QE d'articles entrés en stock en date DES.

L'on procède, alors, à la détermination du prix moyen d'achat PMA des articles en stock à la date d'entrée en stock DES, la détermination de ce prix moyen d'achat PMA s'effectuant à la date de traitement DT. Cette dernière est, de préférence, choisie au plus tôt à la fin du mois comptable correspondant à ladite date d'imputation en achat DIA.

On remarquera que cette date de traitement DT peut, en fait, être choisie à la fin du mois comptable correspondant à ladite date d'imputation en achat DIA. Cependant et, notamment, pour des raisons de commodités, il est, encore, possible de choisir la date de traitement DT au moins au début du mois calendaire suivant le mois comptable correspondant au mois de la date d'imputation DIA en achat des articles entrés en stock.

A ce propos, il convient d'observer que, tant que la facture n'a pas été contrôlée par rapport à la livraison en date d'entrée en stock DES, le procédé ne permet pas de déterminer le prix moyen d'achat PMA des articles correspondant à cette date d'entrée en stock DES.

Aussi, il est possible qu'il s'écoule un certain laps de temps entre la date d'entrée en stock DES et la date d'imputation en achat DIA.

Selon une première situation, ladite date d'entrée en stock DES et la date d'imputation en achat DIA correspondent au même mois comptable. Dans un pareil cas, le procédé consiste à déterminer, à la date de traitement DT, le prix moyen d'achat PMA des articles en stock à la date d'entrée en stock DES, cette date de traitement DT étant choisie au plus tôt à la fin du mois comptable correspondant à ladite date d'entrée en stock DES.

Un tel mode de réalisation permet de déterminer le prix moyen d'achat PMA au plus tôt à la fin du mois correspondant à la date d'entrée en stock DES. Ceci autorise une gestion différée des achats à la fin du mois de la réception de marchandises et/ou de matières premières. Pour des raisons de commodités ou d'impératifs, une telle gestion peut, encore, intervenir en début du mois suivant (voire ultérieurement dans ce mois) le mois de l'entrée en stock.

Cependant, la réception de la facture et, a fortiori, le contrôle de cette dernière peuvent intervenir le mois suivant ou, encore, le mois d'après, par rapport au mois correspondant à la date d'entrée en stock DES.

Dans un pareil cas, la date d'imputation en achat DIA est rattachée à un mois calendaire différent de celui correspondant à la date d'entrée en stock DES. La date de traitement DT, à laquelle est déterminé le prix moyen d'achat PMA des articles entrés en stock en date DES, est, alors, choisie dans le mois comptable correspondant à la date d'imputation en achat DIA, de préférence au plus tôt à la fin de ce mois.

Un tel mode de réalisation autorise une gestion différée des achats étalée sur plus d'un mois, notamment sur au moins deux mois.

Selon une autre caractéristique de la présente invention, le procédé consiste, encore, à déterminer la valeur du stock VES à la date d'entrée en stock DES de la quantité QE d'articles.

Cette valeur du stock VES est déterminée au travers de l'équation (3) suivante :

$$VES = PMA * (Q + QE) \qquad (3)$$

En fait et selon le procédé, cette valeur du stock VES ne peut être déterminée qu'après avoir déterminé le prix moyen d'achat PMA des articles de ce stock, constitué par une quantité initiale Q et une quantité additionnelle QE d'articles entrés en stock en date DES.

Aussi, selon un mode de réalisation préféré de l'invention, cette valeur du stock VES, correspondant à la quantité d'articles Q+QE présents dans le stock en date DES, est déterminée de manière différée dans le temps et à la date de traitement DT susmentionnée

La présente invention concerne, encore, un procédé pour la gestion différée des articles d'un stock de marchandises et/ou de matières premières. Un tel stock comporte une quantité initiale Q d'articles à un prix unitaire déterminé PUS à laquelle, d'une part, s'ajoute au moins une quantité QE d'articles lors d'au moins une entrée en stock et, d'autre part, se retranche au moins une quantité QS d'articles lors d'au moins une sortie de stock.

Selon ce procédé l'on attribue, pour chaque entrée en stock d'une quantité QE d'articles, une date d'entrée en stock DES à cette quantité QE d'articles livrés et entrés en stock.

L'on enregistre, par l'intermédiaire de moyens d'enregistrement et dans une mémoire, d'une part, la quantité QE de ces articles et, d'autre part, ladite date d'entrée en stock DES.

En fait, suite à une telle entrée en stock en date DES, il est réceptionné une facture, correspondant à cette entrée en stock, et faisant mention, d'une part, d'une quantité QEF d'articles facturés et, d'autre part, d'un prix unitaire facturé PUF de ces articles.

Aussi, ce procédé consiste, après réception de cette facture, à assurer, par l'intermédiaire de moyens de comparaison, une comparaison entre la quantité d'articles QE entrés en stock et la quantité d'articles facturés QEF.

En cas de correspondance entre ces deux quantités QE et QEF, l'on procède, d'une part, à un enregistrement dans une mémoire, par l'intermédiaire de moyens d'enregistrement, d'un prix unitaire facturé PUF de ces articles et, d'autre part, à une association, par l'intermédiaire de moyens d'association, de ce prix unitaire facturé PUF à ladite date d'entrée en stock DES et à la quantité QE de ces articles.

De plus, pour chaque sortie de stock d'une quantité QS d'articles, l'on attribue une date de sortie de stock DSS et, d'une part, l'on enregistre dans une mémoire, par l'intermédiaire de moyens d'enregistrement, ladite date de sortie de stock DSS ainsi que la quantité d'articles QS correspondant à cette sortie de stock. D'autre part, l'on associe, par l'intermédiaire de moyens d'association, ladite date de sortie de stock DSS ainsi que la quantité d'articles QS correspondant à cette sortie de stock.

L'on détermine, par l'intermédiaire de moyens de calculs, de manière différée dans le temps et à une date de traitement déterminée DT, le prix moyen d'achat PMA de la quantité d'articles en stock à la date d'entrée en stock DES.

Ce prix moyen d'achat PMA est déterminé en fonction, d'une part, de la quantité Q d'articles en stock et du prix unitaire PUS de ces derniers avant ladite entrée en stock de la quantité QE d'articles et, d'autre part, de la quantité QE d'articles entrés en stock en date d'entrée en stock DES et du prix unitaire facturé PUF de ces derniers.

Un tel prix moyen d'achat PMA est déterminé selon l'équation mathématique (1) mentionnée ci-dessus, à savoir :

$$PMA = (Q * PUS + QE * PUF)/(Q + QE) \qquad (1)$$

A ce propos, il convient d'observer que cette équation (1) est applicable lorsqu'aucune sortie de stock n'est intervenue avant la date d'entrée en stock DES de la quantité d'articles QE.

Cependant, lorsqu'une sortie de stock d'une quantité QS d'articles intervient à une date DSS antérieure à la date d'entrée en stock DES, le prix moyen d'achat PMA, à la date d'entrée en stock DES, est défini au travers de l'équation (4) qui suit :

$$PMA = ((Q - QS) * PUS + QE * PUF)/(Q + QE - QS) \qquad \textbf{(4)}$$

Cette dernière équation prend en compte la quantité QS d'articles sortis du stock en date DSS, donc avant l'entrée en stock en date DES. Cette équation (4) permet de déterminer le prix moyen d'achat PMA des articles à la date d'entrée en stock DES.

Le procédé selon l'invention consiste, encore, à déterminer, par l'intermédiaire de moyens de calculs, de manière différée dans le temps et à ladite date de traitement DT, la valeur VS du stock à partir du prix moyen d'achat PMA calculé en fonction du prix unitaire facturé PUF.

En fait, la valeur VS de ce stock dépend de la quantité q d'articles (selon le cas Q+QE, Q-QS ou Q+QE-QS) que contient ce stock à la date à laquelle on détermine cette valeur VS. Cette dernière VS est donnée par l'équation (5) suivante :

$$VS = PMA * (q) \tag{5}$$

A partir de cette équation (5), il est possible de déterminer, soit la valeur du stock VES à la date d'entrée en stock DES d'une quantité QE d'articles, soit la valeur du stock VSS à la date de sortie de stock DSS d'une quantité QS d'articles.

Selon une autre caractéristique du procédé conforme à l'invention, l'on détermine, d'une part, la valeur du stock VES à la date d'entée en stock DES et, d'autre part, la valeur du stock VSS à la date de sortie du stock DSS.

A partir de ces valeurs de stock VES et VSS, l'on détermine, par l'intermédiaire de moyens de calcul, la variation de la valeur du stock VDS correspondant aux articles sujets à un mouvement de stock, ceci à partir de l'équation (6) mathématique suivante :

$$VDS = VES - VSS \tag{6}$$

Une autre caractéristique de ce procédé de gestion différée concerne le fait que le jour où l'on établit la correspondance entre les quantités d'articles entrés en stock QE et facturés QEF, l'on attribue à la facture une date d'imputation en achat DIA.

L'on procède, alors, à la date de traitement DT, à la détermination du prix moyen d'achat PMA des articles en stock à la date d'entrée en stock DES et/ou à la détermination de la valeur VES du stock à la date d'entrée en stock DES d'une quantité déterminée QE d'articles.

En fait, l'on détermine ce prix PMA et/ou cette valeur de stock VES à la date de traitement DT, cette dernière étant choisie, de préférence, au plus tôt à la fin du mois comptable correspondant à ladite date d'imputation en achat DIA.

Là encore, on remarquera que cette date de traitement DT peut, en fait, être choisie à la fin du mois comptable correspondant à ladite date d'imputation en achat DIA. Cependant et, par exemple, pour des raisons de commodités, il est, encore, possible de choisir la date de traitement DT au moins au début du mois calendaire suivant le mois comptable correspondant au mois de la date d'imputation DIA en achat des articles entrés en stock.

Selon une autre caractéristique, lorsque la date de sortie de stock DSS correspond au même mois comptable que la date d'imputation en achat DIA ou est antérieure à ce mois comptable, l'on procède, au plus tôt à la fin du mois comptable correspondant à cette date d'imputation en achat DIA et à la date de traitement DT, à la détermination du prix moyen d'achat PMA des articles en stock à la date d'entrée en stock DES et/ou à la détermination de la valeur VES du stock à la date d'entrée en stock DES et/ou à la détermination de la valeur VSS du stock à la date de sortie du stock DSS.

Un tel mode de réalisation permet une gestion différée des articles d'un stock de marchandises et/ou de matières premières sur plusieurs mois.

On observera que, à partir des valeurs de stock VES et VSS, il est possible de déterminer la variation VDS de ce stock à la date de traitement DT, ceci selon l'équation mathématique (6).

Cependant et selon un mode de réalisation préféré, lorsque les dates d'imputation en achat DIA, d'entrée en stock DES et de sortie de stock DSS correspondent au même mois comptable, l'on assure, au plus tôt à la fin du mois comptable correspondant à cette date d'entrée en stock DES et à la date de traitement DT, la détermination du prix moyen d'achat PMA des articles en stock à la date d'entrée en stock DES et/ou la détermination de la valeur VES du stock à la date d'entrée en stock DES et/ou la détermination de la valeur VSS du stock à la date de sortie du stock DSS.

Là encore, à partir de ces valeurs de stock VES et VSS, il est possible de déterminer, à la date de traitement DT, la variation VDS de la valeur de ce stock.

Un tel mode de réalisation autorise un traitement des achats des articles d'un stock de marchandises et/ou de matières premières sur un seul mois comptable.

Une autre caractéristique de l'invention consiste, encore, à relever le prix de vente unitaire PVU des articles sortis du stock en date DSS et à associer ce prix de vente PVU à cette date de sortie de stock DSS. Par la suite, de manière différée dans le temps et en date de traitement DT, l'on détermine, par l'intermédiaire de moyens de calcul, en fonction de ce prix de vente PVU et du prix moyen d'achat PMA des articles à la date de sortie de stock DSS, la marge M réalisée au travers de cette vente et à cette date de sortie de stock DSS.

Selon l'invention, on réalise l'affichage, par l'intermédiaire de moyens d'affichage, et/ou l'impression, par l'intermédiaire de moyens d'impression, de certaines au moins des valeurs déterminées et/ou notions associées à ces dernières, à savoir :

- le prix moyen d'achat PMA, la valeur VS du stock (VES, VSS), la variation de la valeur de ce stock VDS, la marge M, les dates d'entrée DES et/ou de sortie DSS de stock, les dates d'imputation DIA, les quantités d'articles entrés en stock QE et/ou facturés QEF et/ou sortis de stock QS.

A ce propos, on observera que certaines au moins des valeurs déterminées et/ou notions associées à ces dernières et mentionnées ci-dessus peuvent être enregistrées, par l'intermédiaire de moyens d'enregistrement, dans une mémoire ou sur un moyen de stockage, voire transmises, par des moyens de transmission, en vue d'être exploitées par des moyens de gestion et/ou de comptabilité, notamment définis par des moyens de traitement, par exemple sous forme d'un logiciel.

A ce propos, il convient d'observer que les moyens d'enregistrement, de comparaison, d'association, de calcul ainsi que ladite mémoire, aptes à mettre en oeuvre les procédés décrits ci-dessus, peuvent, au moins en partie, d'une part, être définis par des moyens de traitement, notamment de type informatique, par exemple sous la forme d'un logiciel et, d'autre part, se retrouver au niveau de moyens informatiques définis, notamment, par un ordinateur ou analogue.

De plus, on remarquera que au moins certaines étapes des procédés décrits ci-dessus sont susceptibles d'être réalisées par l'intermédiaire de moyens de traitement, notamment de type informatique, par exemple sous la forme d'un logiciel.

En fait, les procédés décrits ci-dessus permettent de déterminer le prix moyen d'achat PMA, la valeur VS d'un stock d'article (VES, VSS), la variation de la valeur d'un tel stock VDS, à partir du coût réel, facturé et contrôlé de ces articles.

La détermination de ces prix et valeurs nécessite la réception et le contrôle des factures correspondant aux mouvements de stock. Cette réception et ce contrôle étant décalés dans le temps, la détermination des prix et valeurs se fait, également, de manière décalée dans le temps et à une date de traitement DT choisie de manière appropriée.

Cependant, les valeurs et prix ainsi déterminés, de manière différée et après contrôle uniquement, présentent l'avantage d'être exacts.

**Revendications**

**1.** Procédé pour la détermination du prix moyen d'achat (PMA) des articles d'un stock de marchandises et/ou de matières premières constitué, d'une part, par une quantité initiale (Q) d'articles à un prix unitaire (PUS) déterminé, et, d'autre part, par une quantité (QE) additionnelle d'articles correspondant à une entrée en stock, ceci après une telle entrée en stock, **caractérisé par le fait que** :

- lors de l'entrée en stock d'une quantité (QE) d'articles, l'on attribue une date d'entrée en stock (DES) à cette quantité (QE) d'articles et l'on enregistre, par l'intermédiaire de moyens d'enregistrement et dans une mémoire, d'une part, la quantité (QE) de ces articles et, d'autre part, ladite date d'entrée en stock (DES) ;

- lors de la réception d'une facture correspondant à cette entrée en stock, l'on détermine, d'une part, la quantité (QEF) d'articles facturés et, d'autre part, le prix unitaire facturé (PUF) de ces articles ;

- l'on assure, par l'intermédiaire de moyens de comparaison, une comparaison entre la quantité (QE) d'articles entrés en stock et la quantité (QEF) d'articles facturés ;

- en cas de correspondance entre les quantités d'articles entrés en stock (QE) et facturés (QEF), l'on enregistre, par l'intermédiaire de moyens d'enregistrement et dans une mémoire, le prix unitaire facturé (PUF) correspondant à la quantité (QE) d'articles entrés en stock à la date d'entrée en stock (DES) ;

- l'on détermine, par l'intermédiaire de moyens de calculs, de manière différée dans le temps et à une date de traitement déterminée (DT), le prix moyen d'achat (PMA) de la quantité (Q+QE) d'articles en stock à la date d'entrée en stock (DES), ceci en fonction, d'une part, de la quantité (Q) d'articles en stock avant ladite entrée en stock et du prix unitaire déterminé (PUS) de ces derniers et, d'autre part, de la quantité (QE) d'articles entrés en stock et du prix unitaire facturé (PUF) de ces derniers.

**2.** Procédé selon la revendication 1, **caractérisé par le fait que** :

- lorsque l'on réceptionne la facture correspondant à cette entrée en stock, l'on assure une saisie, par l'intermédiaire de moyens de saisie, ainsi qu'un enregistrement, par l'intermédiaire de moyens d'enregistrement et dans une mémoire, de la quantité (QEF) d'articles facturés ainsi que du prix unitaire facturé (PUF) de ces articles ;

- l'on assure, par l'intermédiaire de moyens de comparaison, la comparaison entre la quantité (QE) d'articles entrés en stock et la quantité (QEF) d'articles facturés ;

- en cas de correspondance entre la quantité d'articles entrés en stock (QE) et la quantité d'articles facturés (QEF), l'on associe, par l'intermédiaire de moyens d'association, ce prix unitaire facturé (PUF), d'une part, à la quantité (QE) d'articles entrés en stock et, d'autre part, à la date d'entrée en stock (DES) de ces derniers en vue de déterminer, de manière différée et en date de traitement (DT), le prix moyen d'achat (PMA) des articles en stock à la date d'entrée en stock (DES) de la quantité (QE) d'articles.

3. Procédé selon l'une quelconque des revendications précédentes, **caractérisé par le fait que** :

- le jour où l'on établit la correspondance entre les quantités d'articles entrés en stock (QE) et facturés (QEF), l'on attribue à la facture une date d'imputation en achat (DIA) ;

- l'on procède, au plus tôt à la fin du mois comptable correspondant à ladite date d'imputation en achat (DIA) et à la date de traitement (DT), à la détermination du prix moyen d'achat (PMA) des articles en stock à la date d'entrée en stock (DES).

4. Procédé selon la revendication 3, **caractérisé par le fait que** lorsque les dates d'imputation en achat (DIA) et d'entrée en stock (DES) correspondent au même mois comptable, l'on assure, au plus tôt à la fin du mois comptable correspondant à cette date d'entrée en stock (DES) et à la date de traitement (DT), la détermination du prix moyen d'achat (PMA) des articles en stock à la date d'entrée en stock (DES).

5. Procédé selon l'une quelconque des revendications précédentes, **caractérisé en ce que** l'on détermine, de manière différée dans le temps et à une date de traitement (DT), la valeur du stock (VES) à la date d'entrée en stock (DES) de la quantité (QE) d'articles, ceci en fonction du prix moyen d'achat (PMA) des articles du stock et de la quantité (Q+QE) de ces articles présents dans le stock à la date d'entrée en stock (DES) .

6. Procédé selon l'une quelconque des revendications précédentes, **caractérisé par le fait qu'**au moins certaines étapes de ce procédé sont mises en oeuvre par des moyens de traitement, notamment de type informatique, par exemple sous la forme d'un logiciel.

7. Procédé pour la gestion différée des articles d'un stock de marchandises et/ou de matières premières comportant une quantité initiale (Q) d'articles à un prix unitaire déterminé (PUS) et à laquelle, d'une part, s'ajoute au moins une quantité (QE) d'articles lors d'au moins une entrée en stock et, d'autre part, se retranche au moins une quantité (QS) d'articles lors d'au moins une sortie de stock, **caractérisé en ce que** :

- pour chaque entrée d'une quantité (QE) d'articles en stock, l'on attribue une date d'entrée en stock (DES) et l'on enregistre, par l'intermédiaire de moyens d'enregistrement et dans une mémoire, d'une part, la quantité (QE) de ces articles et, d'autre part, ladite date d'entrée en stock (DES) ;

- après réception de la facture correspondant à cette entrée en stock, l'on assure, par l'intermédiaire de moyens de comparaison, une comparaison entre les quantités d'articles entrés en stock (QE) et facturés (QEF) pour, en cas de correspondance entre ces deux quantités (QE) et (QEF), d'une part, enregistrer dans une mémoire, par l'intermédiaire de moyens d'enregistrement, un prix unitaire facturé (PUF) de ces articles entrés en stock et, d'autre part, associer, par l'intermédiaire de moyens d'association, ce prix unitaire facturé (PUF) à ladite date d'entrée en stock (DES) et à la quantité (QE) de ces articles ;

- pour chaque sortie de stock d'une quantité (QS) d'articles, l'on attribue une date de sortie de stock (DSS) et, d'une part, l'on enregistre dans une mémoire, par l'intermédiaire de moyens d'enregistrement, et, d'autre part, l'on associe ladite date de sortie de stock (DSS) ainsi que la quantité d'articles (QS) correspondant à cette sortie de stock ;

- l'on détermine, par l'intermédiaire de moyens de calculs, de manière différée dans le temps et à une date de traitement déterminée (DT), le prix moyen d'achat (PMA) de la quantité d'articles en stock à la date d'entrée en stock (DES), ceci en fonction, d'une part, de la quantité (Q) d'articles en stock et du prix unitaire (PUS) de ces derniers avant ladite entrée en stock et, d'autre part, de la quantité (QE) d'articles entrés en stock et du prix unitaire facturé (PUF) de ces derniers, voire, le cas échéant, de la quantité d'articles (QS) sortis de ce stock.

**8.** Procédé selon la revendication 7, **caractérisé par le fait que** l'on détermine, par l'intermédiaire de moyens de calculs, de manière différée dans le temps et à ladite date de traitement (DT), la valeur du stock à la date d'entrée en stock (VES) et/ou à la date de sortie de stock (VSS), ceci à partir du prix moyen d'achat (PMA) calculé en fonction du prix unitaire facturé (PUF).

**9.** Procédé selon la revendication 8, **caractérisé par le fait que**, à partir des valeurs (VES, VSS) du stock, d'une part, à la date d'entrée en stock (DES) et, d'autre part, à la date de sortie de stock (DSS), l'on détermine, par l'intermédiaire de moyens de calcul, la variation de la valeur du stock (VDS) entre ces deux dates (DES, DSS).

**10.** Procédé selon les revendications 7 et 8, **caractérisé par le fait que** :

- le jour où l'on établit la correspondance entre les quantités d'articles entrés en stock (QE) et facturés (QEF), l'on attribue à la facture une date d'imputation en achat (DIA) ;

- l'on procède, au plus tôt à la fin du mois comptable correspondant à ladite date d'imputation en achat (DIA) et à la date de traitement (DT), à la détermination du prix moyen d'achat (PMA) des articles en stock à la date d'entrée en stock (DES) et/ou à la détermination de la valeur (VES) du stock à la date d'entrée en stock (DES) d'une quantité déterminée (QE) d'articles.

**11.** Procédé selon la revendication 10, **caractérisé par le fait que**, lorsque la date de sortie de stock (DSS) correspond au même mois comptable que la date d'imputation en achat (DIA) ou est antérieure à ce mois comptable, l'on procède, au plus tôt à la fin du mois comptable correspondant à cette date d'imputation en achat (DIA) et à la date de traitement (DT), à la détermination du prix moyen d'achat (PMA) des articles en stock à la date d'entrée en stock (DES) et/ou à la détermination de la valeur (VES) du stock à la date d'entrée en stock (DES) et/ou à la détermination de la valeur (VSS) du stock à la date de sortie du stock (DSS).

**12.** Procédé selon la revendication 11, **caractérisé par le fait que**, lorsque les dates d'imputation en achat (DIA), d'entrée en stock (DES) et de sortie de stock (DSS) correspondent au même mois comptable, l'on assure, au plus tôt à la fin du mois comptable correspondant à cette date d'entrée en stock (DES) et à la date de traitement (DT), la détermination du prix moyen d'achat (PMA) des articles en stock à la date d'entrée en stock (DES) et/ou la détermination de la valeur (VES) du stock à la date d'entrée en stock (DES) et/ou la détermination de la valeur (VSS) du stock à la date de sortie du stock (DSS).

**13.** Procédé selon l'une quelconque des revendications 7 à 12, **caractérisé par le fait qu'**au moins certaines étapes de ce procédé sont mises en oeuvre par des moyens de traitement, notamment de type informatique, par exemple sous la forme d'un logiciel.

**Office européen des brevets**

## RAPPORT DE RECHERCHE EUROPEENNE

Numéro de la demande

EP 01 44 0365

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 574 959 A (PRODUCTION COMPOSANTS ET) 20 juin 1986 (1986-06-20) * abrégé * * page 2, ligne 1 – page 4, ligne 5 * * page 6, ligne 10 – page 9, ligne 22 * | 1-13 | G06F17/60 |
| X | GB 2 249 416 A (RUEGO DEV CO) 6 mai 1992 (1992-05-06) * abrégé * * page 1, ligne 5 – ligne 10 * * page 3, ligne 11 – ligne 15 * | 1-13 | |
| X | WO 00 29999 A (GEN ELECTRIC) 25 mai 2000 (2000-05-25) * page 4, ligne 20 – page 5, ligne 26 * | 1-13 | |

**DOMAINES TECHNIQUES RECHERCHES (Int.Cl.7)**

G06F

Le présent rapport a été établi pour toutes les revendications

| Lieu de la recherche | Date d'achèvement de la recherche | Examinateur |
|---|---|---|
| LA HAYE | 12 février 2002 | Marcu, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**     EP 01 44 0365

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-02-2002

| Document brevet cité au rapport de recherche | | Date de publication | Membre(s) de la famille de brevet(s) | | Date de publication |
|---|---|---|---|---|---|
| FR 2574959 | A | 20-06-1986 | FR | 2574959 A1 | 20-06-1986 |
| GB 2249416 | A | 06-05-1992 | IE | 904728 A1 | 01-07-1992 |
| | | | BE | 1003531 A6 | 14-04-1992 |
| WO 0029999 | A | 25-05-2000 | US | 6341271 B1 | 22-01-2002 |
| | | | EP | 1129421 A1 | 05-09-2001 |
| | | | WO | 0029999 A1 | 25-05-2000 |

EPO FORM P0460